# EUROPEAN PATENT SPECIFICATION

(11) **EP 2 586 690 B1**
(45) Date of publication and mention of the grant of the patent: **14.01.2015**
(21) Application number: 12187704.7
(22) Date of filing: 08.10.2012
(51) Int. Cl.: B62J 17/00, B62K 19/46, B62J 6/04

(54) **Rear central cover locking structure for motorcycle**
Hintere Arretierungsstruktur für die zentrale Abdeckung für ein Motorrad
Structure de verrouillage de couvercle central arrière pour motocyclette

(30) Priority: 25.10.2011 TW 100138690
(43) Date of publication of application: 01.05.2013
(73) Proprietor: Kwang Yang Motor Co., Ltd., 807 Kaohsiung (TW)
(72) Inventor: Yu, Cheng-Wen, 813 Kaohsiung City (TW)
(74) Representative: Lang, Christian

(56) References cited:
- EP-A1- 1 939 079
- WO-A2-2011/001443
- JP-A- H05 105 140

## Description

### Cross-Reference to Related Application

This application claims the benefit of Taiwan Patent Application No. 100138690, filed on October 25, 2011.

### 1. Field of the Invention:

The present invention relates to a motorcycle rear central cover locking structure, and more particularly to a motorcycle rear central cover locking structure having a locking structure disposed at the open space below the seat.

### 2. Related Art:

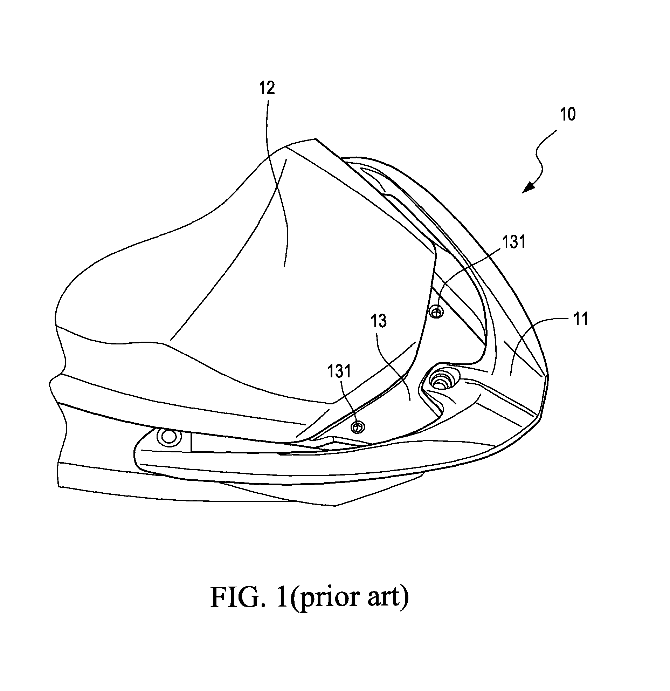

Please refer to FIG. 1, wherein a rear frame 11 is disposed at a rear end of an existing motorcycle 10; and below the rear frame 11, a rear central cover 13 is disposed at the back of a seat 12. The rear central cover 13 generally uses an exposed screw-lock component 131 as the locking mechanism thereof. That is, the screw-lock component 131 for locking the rear central cover 13 is exposed to the exterior surface of the motorcycle rear end 10. This conventional rear central cover locking structure may affect integral exterior appearance, and also may be easily rusted owing to the exposure to sun and rain (and, of course, rusted screw-lock components also affect the exterior appearance of the motorcycle). Rust-proof material may be used to prevent the screw-lock component from rusting; however, this brings unnecessary manufacture cost. Further, since the rear central cover is positioned very close to the seat lock of the seat, it is likely that the exposed locking component may be unlocked; once the rear central cover is removed, it is easy to access the storage compartment through the hollow space left by the removed rear central cover and steals things therefrom. Other arrangements for a rear frame or rear end of a motorcycle are known from EP 1 939 079 A1, WO 2011/001443 A2 and JP H05 105140 A.

### SUMMARY

One objective of the present invention is to provide a motorcycle with a rear central cover structure, wherein the locking structure thereof is disposed inside the storage compartment space and is thus closed and covered by the seat. The motorcycle with a rear central cover structure according to the present invention has a rear central cover structure disposed at the back of the seat of the motorcycle. The motorcycle comprises a motorcycle frame, a vehicle body side cover, a rear central cover, and a taillight set. The vehicle body side cover covers the motorcycle frame and surrounds an open part. The open part is disposed with a storage compartment, and a seat is positioned above the storage compartment. A rear central cover is disposed at the back of the open part. The rear central cover, the vehicle body side cover and the taillight set are combined together. A rear supporting member is disposed above the taillight set. Two extending parts extend forward from the rear central cover, and a locking structure is disposed between the two extending parts. The vehicle body side cover is disposed with a vehicle body side cover locking base, wherein the locking structure of the rear central cover and the vehicle body side cover locking base are disposed together inside the open part and below the storage compartment.

In one embodiment, the locking structure that is corresponding to the vehicle body side cover locking base is disposed with a rear central cover locking base, and by using a screw-lock component, the rear central cover locking base and the vehicle body side cover locking base may be locked together.

In one embodiment, the locking structure is disposed between the extending part and a battery.

In one embodiment, the rear supporting member includes a pair of locking fork parts extending along the rear section of the open part towards the front of the motorcycle for locking the rear supporting member to the motorcycle frame. The locking point of the locking fork part is positioned at the front of the locking point of the locking structure of the rear central cover. The rear central cover further includes an opening, and the rear supporting member further includes a central column, wherein the central column penetrates through the opening and then fixedly attached to the motorcycle frame.

In one embodiment, a platform forms at the back of the storage compartment inside the open part, and the rear central cover locking structure is disposed below the platform.

The present invention is advantageous in that, unlike those of the prior art, the locking structure of the rear central cover according to the present invention is no longer exposed to the exterior of the motorcycle rear end at the back of the closed seat; instead, the locking structure of the rear central cover according to the present invention is disposed inside the storage compartment space hidden below the seat. When the seat is closed, the locking structure may be covered beneath the seat, and hence may prevent the locking structure from being affected by weather (sun or rain), thereby prolong service lifetime thereof. Further, the rear central cover design according to the present invention makes it is impossible to access the locking structure from the outside of the motorcycle; this may prevent the seat being opened from the position where the rear central cover is disposed, thereby enhancing the anti-theft feature thereof.

### BRIEF DESCRIPTION OF THE DRAWINGS

FIG. 1 is a perspective view illustrating the exposed rear central cover locking structure according to the prior art;
FIG. 2 is a side view illustrating the rear section of the motorcycle according to the present invention;
FIG. 3 is a perspective view illustrating the rear central cover locked to the back of the open part of the motorcycle according to the present invention;
FIG. 4 is a top view illustrating the rear central cover locked to the back of the open part of the motorcycle according to the present invention;
FIG. 5 is a perspective view illustrating the rear central cover structure seen from the top according to the embodiment of the present invention;
FIG. 6 is a perspective view illustrating the rear central cover structure seen from the bottom according to the embodiment of the present invention; and
FIG. 7 is a perspective view illustrating the rear central cover structure after the seat is shut according to the embodiment of the present invention

### DETAILED DESCRIPTION

Exemplary embodiments according to the present invention will now be described more fully hereinafter with reference to the accompanying drawings. The accompanying drawings are only simplified views that schematically illustrate the basic configuration of the present invention. Hence, only components relevant with the present disclosure are shown in the accompanying drawings, and those components in the accompanying drawings are not drawn according to their actual sizes, numbers or shapes; in practice, implementing sizes, numbers or shapes thereof are variedly designed according to actual requirement, and the layout of the components may be even more complicated than that shown in the accompanying drawings. Further, unless there is any additional description saying otherwise, the phrases "front," "rear," "left," "right," "above" and "below" are indicating positions corresponding to a rider on the motorcycle. That is, the position at the head of the motorcycle is referred to as the "front," the position at the tail of the motorcycle is referred to as the "rear," the two extending directions at the two sides of the handle are referred to as the "left" and the "right," the direction extending towards the ground is referred to as the "below", and the direction extending towards the sky is referred to as the "above."

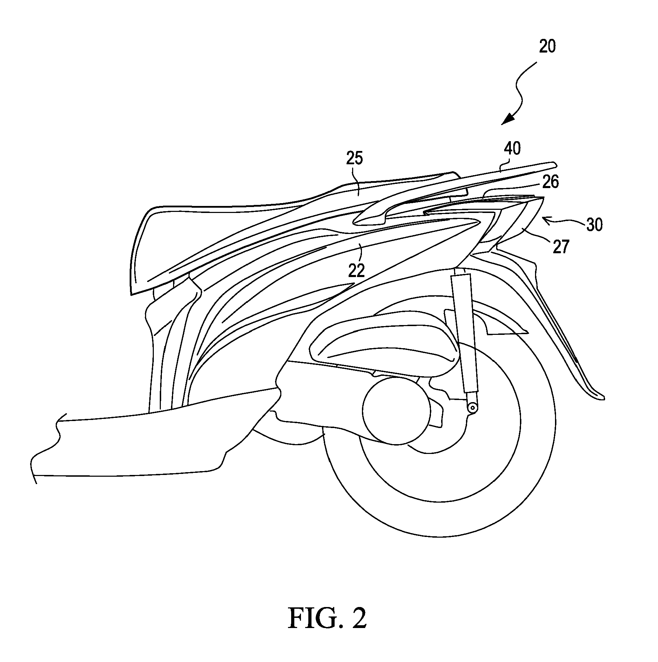

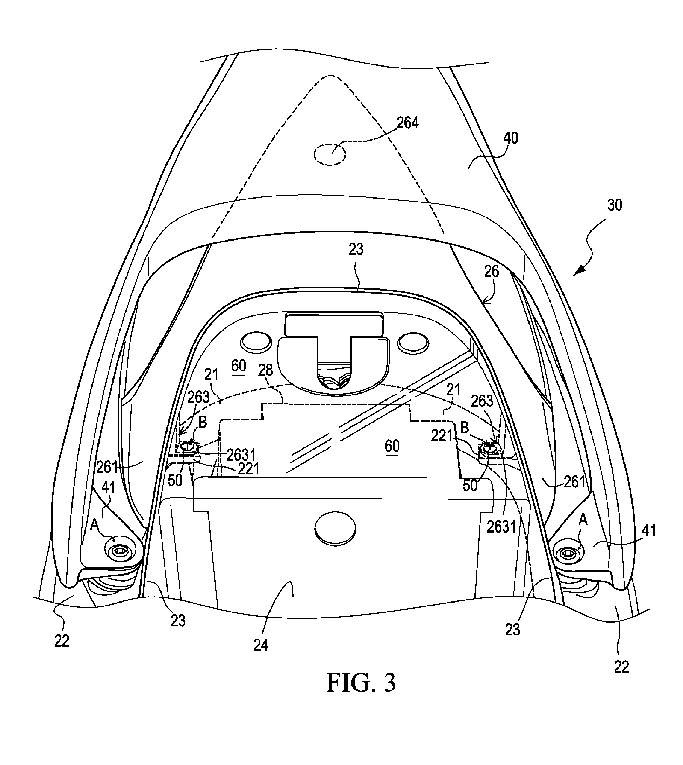

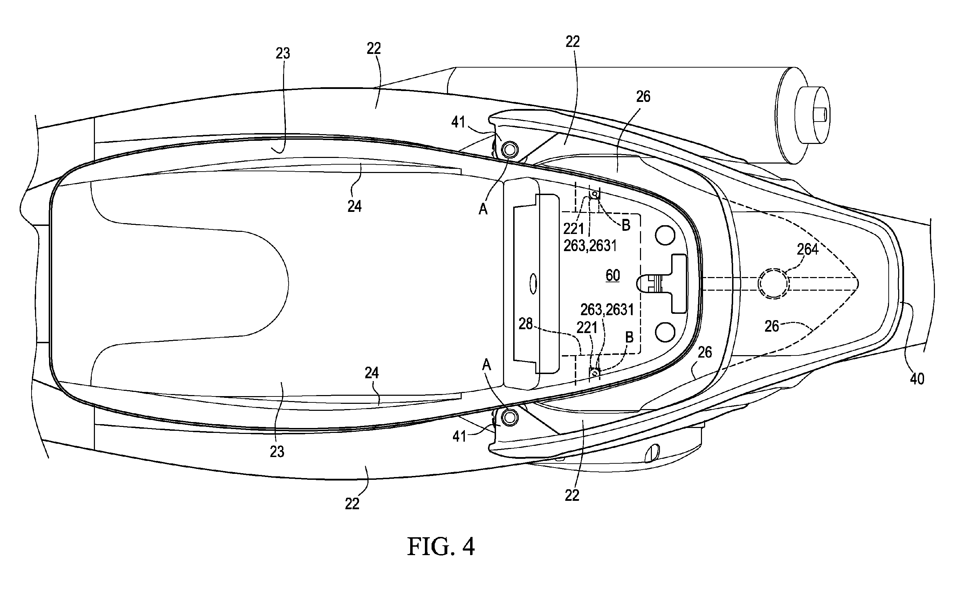

Please refer to FIGS. 2 to 7. FIG. 2 is a side view illustrating the rear section of the motorcycle according to the embodiment of the present invention; FIG. 3 is a perspective view illustrating the rear central cover locked to the back of the open part of the motorcycle according to the embodiment of the present invention; FIG. 4 is a top view illustrating the rear central cover locked to the back of the open part of the motorcycle according to the embodiment of the present invention. The rear central cover of the present embodiment is used in a motorcycle 20. The motorcycle 20 includes a motorcycle frame 21, a vehicle body side cover 22, a rear central cover 26, and a taillight set 27. The motorcycle frame 21 is covered by the vehicle body side cover 22; wherein, the phrase "cover" used herein refers to both configurations as follows: that the whole motorcycle frame 21 is completely covered beneath the vehicle body side cover 22; or that two outermost surfaces of the motorcycle frame 21 is exposed to the outside, which means that the motorcycle frame 21 is partially covered by the vehicle body side cover 22. The vehicle body side cover 22 surrounds an open part 23. The open part 23 is disposed with a storage compartment 24, and a seat 25 is positioned above the storage compartment 24. A rear central cover 26 is disposed at the back of the open part 23. The rear central cover 26, the vehicle body side cover 22 and the taillight set 27 are combined together (usually this combination forms a motorcycle tail part 30; but the present invention is not limited thereto). A rear supporting member 40 is disposed above the taillight set 27.

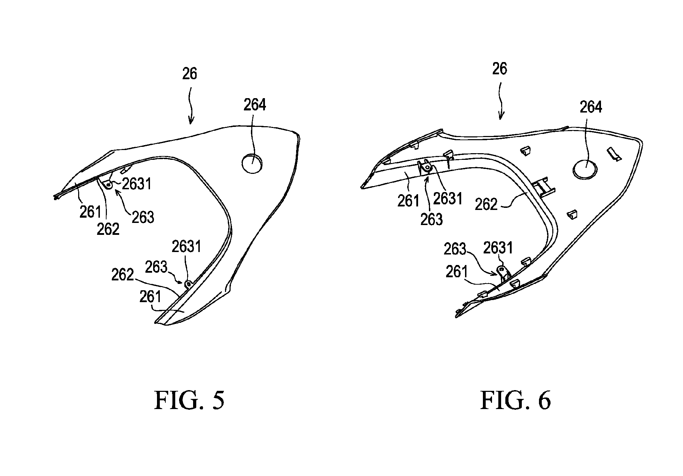

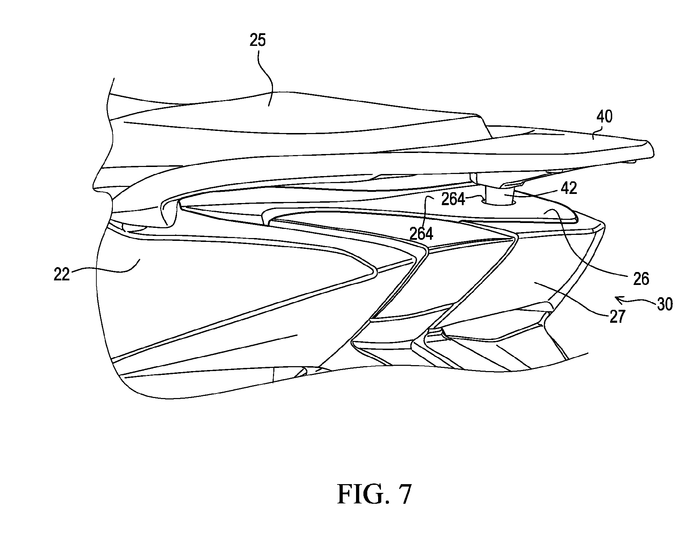

Please refer to FIGS. 5, 6 and 7. FIG. 5 is a perspective view illustrating the rear central cover structure seen from the top according to the embodiment of the present invention; FIG. 6 is a perspective view illustrating the rear central cover structure seen from the bottom according to the embodiment of the present invention; and FIG. 7 is a perspective view illustrating the rear central cover structure after the seat is shut according to the embodiment of the present invention. In the previously described structure, two extending parts 261 extend forward from the rear central cover 26, and a locking structure 263 is disposed on the extending parts 261. The vehicle body side cover 22 is disposed with a vehicle body side cover locking base 221, wherein the locking structure 263 of the rear central cover 26 and the vehicle body side cover locking base 221 are disposed together inside the open part 23 and below the storage compartment 24. Thus, when the seat 25 is shut, the open part 23 is closed, and thereby covering the locking structure 263 at the front of the rear central cover 26.(as shown in fig. 7)

Please further refer to FIGS. 3 and 4, wherein the locking structure 263 includes a rear central cover locking base 2631, and more preferably, the rear central cover locking base 2631 is disposed at an inner surface 262 between the two extending parts 261, and the position of the rear central cover locking base 2631 corresponds to the position where the vehicle body side cover locking base 221 is disposed. By using a screw-lock component 50 penetrating through the rear central cover locking base 2631 and the vehicle body side cover locking base 221, the rear central cover locking base 2631 and the vehicle body side cover locking base 221 may be locked together, thereby fixing the rear central cover 26 and the vehicle body side cover 22. In addition, the locking structure 263 of the rear central cover 26 is located between the extending parts 261 and a battery 28. Further, the rear supporting member 40 includes a pair of locking fork parts 41 extending along the rear section of the open part 23 towards the front of the motorcycle for locking the rear supporting member 40 to the motorcycle frame 21. The locking point A of the locking fork parts 41 is positioned at the front of the locking point B of the locking structure 263 of the rear central cover 26. In addition, a platform 60 is further formed at the back of the storage compartment 24 inside the open part 23, and the locking structure 263 of the rear central cover 26 is disposed below the platform 60.

Please further refer to FIG. 7. In consideration of lock-prying prevention, the rear central cover 26 is further formed with an opening 264, and the rear supporting member 40 s further disposed with a central column 42; wherein, the central column 42 penetrates through the opening 264 and then fixedly attached to the motorcycle frame 21.

According to the previous embodiment, the locking structure of the rear central cover according to the present invention is no longer exposed to the exterior of the motorcycle rear end at the back of the closed seat; instead, the locking structure of the rear central cover according to the present invention is disposed inside the storage compartment space hidden below the seat. When the seat is closed, the locking structure may be covered beneath the seat, and hence may prevent the locking structure from being affected by weather (sun or rain), thereby prolong service lifetime thereof. Further, the rear central cover design according to the present invention makes it is impossible to access the locking structure from the outside of the motorcycle; this may prevent the seat being opened from the position where the rear central cover is disposed, thereby enhancing the anti-theft feature thereof.

## Claims

1. A motorcycle having a rear central cover locking structure, wherein the motorcycle (20) comprises a motorcycle frame (21), a vehicle body side cover (22), a rear central cover (26), and a taillight set (27); the vehicle body side cover (22) covers the motorcycle frame (21) and surrounds an open part (23), the open part (23) is disposed with a storage compartment (24), a seat (25) is positioned above the storage compartment (24), the rear central cover (26) is disposed at the back of the open part (23), and the rear central cover (26), the vehicle body side cover (22) and the taillight set (27) are combined together; a rear supporting member (40) is disposed above the taillight set (27), wherein two extending parts (261) extend forward from the rear central cover (26), and a locking structure (263) is disposed on the extending parts (261), the vehicle body side cover (22) is disposed with a vehicle body side cover locking base (221), wherein the locking structure (263) of the rear central cover (26) and the vehicle body side cover locking base (221) are disposed together inside the open part (23) and below the storage compartment (24).

2. The motorcycle having a rear central cover locking structure of claim 1, wherein the locking structure (263) has a rear central cover locking base (2631), a position of the rear central cover locking base (2631) is corresponding to a position of the vehicle body side cover locking base (221), and by using a screw-lock component (50), the rear central cover locking base (2631) and the vehicle body side cover locking base (221) are locked together.

3. The motorcycle having a rear central cover locking structure of claim 1, wherein the locking structure (263) of the rear central cover (26) is disposed between the extending part (261) and a battery (28).

4. The motorcycle having a rear central cover locking structure of claim 1, wherein the rear supporting member (40) comprises a pair of locking fork parts (41) extending along rear section of the open part (23) towards front of the motorcycle (20) for locking the rear supporting member (40) to the motorcycle frame (21); a locking point (A) of the locking fork part (41) is positioned at the front of a locking point (B) of the locking structure (263) of the rear central cover (26).

5. The motorcycle having a rear central cover locking structure of claim 1, wherein the rear central cover (26) further comprises an opening (264), and the rear supporting member (40) further comprises a central column (42), wherein the central column (42) penetrates through the opening (264) and then fixedly attached to the motorcycle frame (21).

6. The motorcycle having a rear central cover locking structure of claim 1, wherein a platform (60) is formed at the back of the storage compartment (24) inside the open part (23), and the locking structure (263) of the rear central cover (26) is disposed below the platform (60).

## Patentansprüche

1. Motorrad mit einer hinteren Arretierungsstruktur für die zentrale Abdeckung, wobei das Motorrad (20) einen Motorradrahmen (21), eine Karosserieseitenabdeckung (22), eine hintere, zentrale Abdeckung (26) und eine Heckleuchtengruppe (27) umfasst, wobei die Karosserieseitenabdeckung (22) den Motorradrahmen (21) bedeckt und einen offenen Teil (23) umgibt, wobei der offene Teil (23) ein Staufach (24) beinhaltet, wobei ein Sitz (25) oberhalb des Staufachs (24) angeordnet ist, wobei die hintere, zentrale Abdeckung (26) an der Rückseite des offenen Teils (23) angeordnet ist, wobei die hintere, zentrale Abdeckung (26), die Karosserieseitenabdeckung (22) und die Heckleuchtengruppe (27) miteinander verbunden sind, wobei ein hinteres Stützelement (40) über der Heckleuchtengruppe (27) angeordnet ist, wobei sich zwei erstreckende Teile (261) nach vorne von der hinteren, zentralen Abdeckung (26) erstrecken und eine Arretierungsstruktur (263) an den sich erstreckenden Teilen (261) angebracht ist, wobei die Karosserieseitenabdeckung (22) eine Arretierungsbasis der Karosserieseitenabdeckung (221) aufweist, wobei die Arretierungsstruktur (263) der hinteren, zentralen Abdeckung (26) und die Arretierungsbasis der Karosserieseitenabdeckung (221) zusammen im Inneren des offenen Teils (23) und unterhalb des Staufachs (24) angeordnet sind.

2. Motorrad mit einer hinteren Arretierungsstruktur für die zentrale Abdeckung nach Anspruch 1, wobei die Arretierungsstruktur (263) eine hintere, zentrale Abdeckungsarretierungsbasis (2631) umfasst, wobei die Position der hinteren, zentralen Abdeckungsarretierungsbasis (2631) der Position der Arretierungsbasis der Karosserieseitenabdeckung (221) entspricht, und wobei die hintere, zentrale Abdeckungsarretierungsbasis (2631) und die Arretierungsbasis der Karosserieseitenabdeckung (221) unter Verwendung eines Schraubensicherungskomponente (50) aneinander befestigt werden.

3. Motorrad mit einer hinteren Arretierungsstruktur für die zentrale Abdeckung nach Anspruch 1, wobei die Arretierungsstruktur (263) der hinteren, zentralen Abdeckung (26) zwischen dem sich erstreckenden Teil (261) und einer Batterie (28) angeordnet ist.

4. Motorrad mit einer hinteren Arretierungsstruktur für die zentrale Abdeckung nach Anspruch 1, wobei das hintere Stützelement (40) ein Paar an Arretierungsgabelstücken (41) umfasst, welche sich entlang eines hinteren Abschnitts des offenen Teils (23) in Richtung der Front des Motorrads (20) erstrecken, um das hintere Stützelement (40) an dem Motorradrahmen (21) zu arretieren, wobei sich ein Arretierungspunkt (A) des Arretierungsgabelstücks (41) vor einem Arretierungspunkt (B) der Arretierungsstruktur (263) der hinteren, zentralen Abdeckung (26) befindet.

5. Motorrad mit einer hinteren Arretierungsstruktur für die zentrale Abdeckung nach Anspruch 1, wobei die hintere, zentrale Abdeckung (26) außerdem eine Öffnung (264) umfasst und das hintere Stützelement (40) außerdem eine zentrale Säule (42) umfasst, wobei die zentrale Säule (42) durch die Öffnung (264) hindurchragt und an dem Motorradrahmen (21) fest angebracht ist.

6. Motorrad mit einer hinteren Arretierungsstruktur für die zentrale Abdeckung nach Anspruch 1, wobei eine Plattform (60) an der Rückseite des Staufachs (24) im Inneren des offenen Teils (23) ausgebildet ist und die Arretierungsstruktur (263) der hinteren, zentralen Abdeckung (26) unter der Plattform (60) angeordnet ist.

## Revendications

1. Moto ayant une structure de fermeture du recouvrement central arrière, la moto (20) comprenant un cadre de moto (21), un recouvrement de côté du corps du véhicule (22), un recouvrement central arrière (26) et un ensemble d'éclairage arrière (27), le recouvrement de côté du corps du véhicule (22) couvrant le cadre de la moto (21) et entourant une partie ouverte (23), la partie ouverte (23) étant disposée avec un compartiment de stockage (24), un siège (25) étant positionné au-dessus du compartiment de stockage (24), le recouvrement central arrière (26) étant disposé à l'arrière de la partie ouverte (23) et le recouvrement central arrière (26), le recouvrement de côté du corps du véhicule (22) et l'ensemble d'éclairage arrière (27) étant combinés ensemble, un élément de support arrière (40) étant disposé au-dessus de l'ensemble d'éclairage arrière (27), deux parties d'extension (261) s'étendant vers l'avant à partir du recouvrement central arrière (26) et une structure de fermeture (263) étant disposée sur les parties d'extension (261), le recouvrement de côté du corps du véhicule (22) étant disposé avec une base de fermeture du recouvrement de côté du corps du véhicule (221), la structure de fermeture (263) du recouvrement central arrière (26) et la base de fermeture du recouvrement de côté du corps du véhicule (221) étant disposées ensemble à l'intérieur de la partie ouverte (23) et en dessous du compartiment de stockage (24).

2. Moto ayant une structure de fermeture du recouvrement central arrière selon la revendication 1, la structure de fermeture (263) ayant une base de fermeture du recouvrement central arrière (2631), une position de la base de fermeture du recouvrement central arrière (2631) correspondant à une position de la base de fermeture du recouvrement de côté du corps du véhicule (221) et la base de fermeture du recouvrement central arrière (2631) et la base de fermeture du recouvrement de côté du corps du véhicule (221) étant fermées ensemble en utilisant un composant de fermeture à vis (50).

3. Moto ayant une structure de fermeture du recouvrement central arrière selon la revendication 1, la structure de fermeture (263) du recouvrement central arrière (26) étant disposée entre la partie d'extension (261) et une batterie (28).

4. Moto ayant une structure de fermeture du recouvrement central arrière selon la revendication 1, l'élément de support arrière (40) comprenant une paire de parties de fourche de fermeture (41) qui s'étendent le long de la section arrière de la partie ouverte (23) vers l'avant de la moto (20) pour fermer l'élément de support arrière (40) sur le cadre de la moto (21), un point de fermeture (A) de la partie de fourche de fermeture (41) étant positionné à l'avant d'un point de fermeture (B) de la structure de fermeture (263) du recouvrement central arrière (26).

5. Moto ayant une structure de fermeture du recouvrement central arrière selon la revendication 1, le recouvrement central arrière (26) comprenant de plus une ouverture (264) et l'élément de support arrière (40) comprenant de plus une colonne centrale (42), la colonne centrale (42) pénétrant à travers l'ouverture (264) et étant ensuite attachée de manière fixe au cadre de la moto (21).

6. Moto ayant une structure de fermeture du recouvrement central arrière selon la revendication 1, une plateforme (60) étant formée à l'arrière du compartiment de stockage (24) à l'intérieur de la partie ouverte (23) et la structure de fermeture (263) du recouvrement central arrière (26) étant disposée en dessous de la plateforme (60).
